# EUROPEAN PATENT APPLICATION

(11) **EP 4 797 794 A2**
(43) Date of publication of application: **26.08.2026**
(21) Application number: 26191024.4
(22) Date of filing: 08.08.2023
(51) Int. Cl.: H04W 36/00

(54) **CONFIGURING BEAM MEASUREMENTS FOR A CELL GROUP**

(30) Priority: 08.08.2022 US 202263396163 P
(62) Document number(s) of the earlier application(s) in accordance with Art. 76 EPC: 23761229.6 / 4 569 873
(71) Applicant: Lenovo (Singapore) Pte. Ltd., Singapore 556741 (SG)
(72) Inventor: BASU MALLICK, Prateek, Singapore 556741 (SG); GOLITSCHEK EDLER VON ELBWART, Alexander, Singapore 556741 (SG); LÖHR, Joachim, Singapore 556741 (SG); GANESAN, Karthikeyan, Singapore 556741 (SG); NANGIA, Vijay, Singapore 556741 (SG); KUCHIBHOTLA, Ravi, Singapore 556741 (SG); GHANBARINEJAD, Majid, Singapore 556741 (SG)
(74) Representative: Openshaw & Co.

(57) **Abstract**

Apparatuses, methods, and systems are disclosed for configuring beam measurements for a cell group. One method (1100) includes receiving (1102), at a user equipment, configuration information for a cell group. The cell group includes at least one cell separate from a current serving cell. The method (1100) includes performing (1104) beam measurements at a physical layer. The beam measurements correspond to the cell group, the current serving cell, or a combination thereof. The method (1100) includes determining (1106), based on the beam measurements, a triggering event at the physical layer. The triggering event corresponds to a triggering cell. The method (1100) includes determining (1108) a type of reporting based on a configuration of the triggering cell.

## Description

### FIELD

The subject matter disclosed herein relates generally to wireless communications and more particularly relates to configuring beam measurements for a cell group.

### BACKGROUND

In certain wireless communications systems, communications may be made at different layers. The different layers may be configured separately from one another.

### BRIEF SUMMARY

Methods for configuring beam measurements for a cell group are disclosed. Apparatuses and systems also perform the functions of the methods. One embodiment of a method includes receiving, at a user equipment ("UE"), configuration information for a cell group. The cell group includes at least one cell separate from a current serving cell. In some embodiments, the method includes performing beam measurements at a physical layer. The beam measurements correspond to the cell group, the current serving cell, or a combination thereof. In certain embodiments, the method includes determining, based on the beam measurements, a triggering event at the physical layer. The triggering event corresponds to a triggering cell. In various embodiments, the method includes determining a type of reporting based on a configuration of the triggering cell.

One apparatus for configuring beam measurements for a cell group includes a receiver to receive configuration information for a cell group. The cell group includes at least one cell separate from a current serving cell. In some embodiments, the apparatus includes a processor to: perform beam measurements at a physical layer, wherein the beam measurements correspond to the cell group, the current serving cell, or a combination thereof; determine, based on the beam measurements, a triggering event at the physical layer, wherein the triggering event corresponds to a triggering cell; and determine a type of reporting based on a configuration of the triggering cell.

Another embodiment of a method for configuring beam measurements for a cell group includes transmitting, at a network device, configuration information for a cell group. The cell group includes at least one cell separate from a current serving cell. In some embodiments, the method includes receiving a report from a UE. The report corresponds to beam measurements via a type of reporting corresponding to a triggering cell, and the beam measurements correspond to the cell group, the current serving cell, or a combination thereof.

Another apparatus for configuring beam measurements for a cell group includes a transmitter to transmit configuration information for a cell group. The cell group includes at least one cell separate from a current serving cell. In some embodiments, the apparatus includes a receiver to receive a report from a UE. The report corresponds to beam measurements via a type of reporting corresponding to a triggering cell, and the beam measurements correspond to the cell group, the current serving cell, or a combination thereof.

### BRIEF DESCRIPTION OF THE DRAWINGS

A more particular description of the embodiments briefly described above will be rendered by reference to specific embodiments that are illustrated in the appended drawings. Understanding that these drawings depict only some embodiments and are not therefore to be considered to be limiting of scope, the embodiments will be described and explained with additional specificity and detail through the use of the accompanying drawings, in which:
Figure 1 is a schematic block diagram illustrating one embodiment of a wireless communication system for configuring beam measurements for a cell group;
Figure 2 is a schematic block diagram illustrating one embodiment of an apparatus that may be used for configuring beam measurements for a cell group;
Figure 3 is a schematic block diagram illustrating one embodiment of an apparatus that may be used for configuring beam measurements for a cell group;
Figure 4 is a schematic block diagram illustrating one embodiment of a system for inter-gNB handover ("HO") procedures;
Figure 5 is a schematic block diagram illustrating one embodiment of a system for intra-AM and/or user plane function ("UPF") HO;
Figure 6 is a block diagram illustrating one embodiment of MIMO parameters containing additional cells;
Figure 7 is a schematic block diagram illustrating one embodiment of a measurement model in a system;
Figure 8 is a schematic block diagram illustrating one embodiment of a system that uses L1 based mobility;
Figure 9 is a schematic block diagram illustrating one embodiment of a system that uses L1 supported mobility with a security key change;
Figure 10 is a schematic block diagram illustrating one embodiment of a system that uses L2 based mobility;
Figure 11 is a flow chart diagram illustrating one embodiment of a method for configuring beam measurements for a cell group; and
Figure 12 is a flow chart diagram illustrating another embodiment of a method for configuring beam measurements for a cell group.

### DETAILED DESCRIPTION

As will be appreciated by one skilled in the art, aspects of the embodiments may be embodied as a system, apparatus, method, or program product. Accordingly, embodiments may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, embodiments may take the form of a program product embodied in one or more computer readable storage devices storing machine readable code, computer readable code, and/or program code, referred hereafter as code. The storage devices may be tangible, non-transitory, and/or non-transmission. The storage devices may not embody signals. In a certain embodiment, the storage devices only employ signals for accessing code.

Certain of the functional units described in this specification may be labeled as modules, in order to more particularly emphasize their implementation independence. For example, a module may be implemented as a hardware circuit comprising custom very-large-scale integration ("VLSI") circuits or gate arrays, off-the-shelf semiconductors such as logic chips, transistors, or other discrete components. A module may also be implemented in programmable hardware devices such as field programmable gate arrays, programmable array logic, programmable logic devices or the like.

Modules may also be implemented in code and/or software for execution by various types of processors. An identified module of code may, for instance, include one or more physical or logical blocks of executable code which may, for instance, be organized as an object, procedure, or function. Nevertheless, the executables of an identified module need not be physically located together, but may include disparate instructions stored in different locations which, when joined logically together, include the module and achieve the stated purpose for the module.

Indeed, a module of code may be a single instruction, or many instructions, and may even be distributed over several different code segments, among different programs, and across several memory devices. Similarly, operational data may be identified and illustrated herein within modules, and may be embodied in any suitable form and organized within any suitable type of data structure. The operational data may be collected as a single data set, or may be distributed over different locations including over different computer readable storage devices. Where a module or portions of a module are implemented in software, the software portions are stored on one or more computer readable storage devices.

Any combination of one or more computer readable medium may be utilized. The computer readable medium may be a computer readable storage medium. The computer readable storage medium may be a storage device storing the code. The storage device may be, for example, but not limited to, an electronic, magnetic, optical, electromagnetic, infrared, holographic, micromechanical, or semiconductor system, apparatus, or device, or any suitable combination of the foregoing.

More specific examples (a non-exhaustive list) of the storage device would include the following: an electrical connection having one or more wires, a portable computer diskette, a hard disk, a random access memory ("RAM"), a read-only memory ("ROM"), an erasable programmable read-only memory ("EPROM" or Flash memory), a portable compact disc read-only memory ("CD-ROM"), an optical storage device, a magnetic storage device, or any suitable combination of the foregoing. In the context of this document, a computer readable storage medium may be any tangible medium that can contain, or store a program for use by or in connection with an instruction execution system, apparatus, or device.

Code for carrying out operations for embodiments may be any number of lines and may be written in any combination of one or more programming languages including an object oriented programming language such as Python, Ruby, Java, Smalltalk, C++, or the like, and conventional procedural programming languages, such as the "C" programming language, or the like, and/or machine languages such as assembly languages. The code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network ("LAN") or a wide area network ("WAN"), or the connection may be made to an external computer (for example, through the Internet using an Internet Service Provider).

Reference throughout this specification to "one embodiment," "an embodiment," or similar language means that a particular feature, structure, or characteristic described in connection with the embodiment is included in at least one embodiment. Thus, appearances of the phrases "in one embodiment," "in an embodiment," and similar language throughout this specification may, but do not necessarily, all refer to the same embodiment, but mean "one or more but not all embodiments" unless expressly specified otherwise. The terms "including," "comprising," "having," and variations thereof mean "including but not limited to," unless expressly specified otherwise. An enumerated listing of items does not imply that any or all of the items are mutually exclusive, unless expressly specified otherwise. The terms "a," "an," and "the" also refer to "one or more" unless expressly specified otherwise.

Furthermore, the described features, structures, or characteristics of the embodiments may be combined in any suitable manner. In the following description, numerous specific details are provided, such as examples of programming, software modules, user selections, network transactions, database queries, database structures, hardware modules, hardware circuits, hardware chips, etc., to provide a thorough understanding of embodiments. One skilled in the relevant art will recognize, however, that embodiments may be practiced without one or more of the specific details, or with other methods, components, materials, and so forth. In other instances, well-known structures, materials, or operations are not shown or described in detail to avoid obscuring aspects of an embodiment.

Aspects of the embodiments are described below with reference to schematic flowchart diagrams and/or schematic block diagrams of methods, apparatuses, systems, and program products according to embodiments. It will be understood that each block of the schematic flowchart diagrams and/or schematic block diagrams, and combinations of blocks in the schematic flowchart diagrams and/or schematic block diagrams, can be implemented by code. The code may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the schematic flowchart diagrams and/or schematic block diagrams block or blocks.

The code may also be stored in a storage device that can direct a computer, other programmable data processing apparatus, or other devices to function in a particular manner, such that the instructions stored in the storage device produce an article of manufacture including instructions which implement the function/act specified in the schematic flowchart diagrams and/or schematic block diagrams block or blocks.

The code may also be loaded onto a computer, other programmable data processing apparatus, or other devices to cause a series of operational steps to be performed on the computer, other programmable apparatus or other devices to produce a computer implemented process such that the code which execute on the computer or other programmable apparatus provide processes for implementing the functions/acts specified in the flowchart and/or block diagram block or blocks.

The schematic flowchart diagrams and/or schematic block diagrams in the Figures illustrate the architecture, functionality, and operation of possible implementations of apparatuses, systems, methods and program products according to various embodiments. In this regard, each block in the schematic flowchart diagrams and/or schematic block diagrams may represent a module, segment, or portion of code, which includes one or more executable instructions of the code for implementing the specified logical function(s).

It should also be noted that, in some alternative implementations, the functions noted in the block may occur out of the order noted in the Figures. For example, two blocks shown in succession may, in fact, be executed substantially concurrently, or the blocks may sometimes be executed in the reverse order, depending upon the functionality involved. Other steps and methods may be conceived that are equivalent in function, logic, or effect to one or more blocks, or portions thereof, of the illustrated Figures.

Although various arrow types and line types may be employed in the flowchart and/or block diagrams, they are understood not to limit the scope of the corresponding embodiments. Indeed, some arrows or other connectors may be used to indicate only the logical flow of the depicted embodiment. For instance, an arrow may indicate a waiting or monitoring period of unspecified duration between enumerated steps of the depicted embodiment. It will also be noted that each block of the block diagrams and/or flowchart diagrams, and combinations of blocks in the block diagrams and/or flowchart diagrams, can be implemented by special purpose hardware-based systems that perform the specified functions or acts, or combinations of special purpose hardware and code.

The description of elements in each figure may refer to elements of proceeding figures. Like numbers refer to like elements in all figures, including alternate embodiments of like elements.

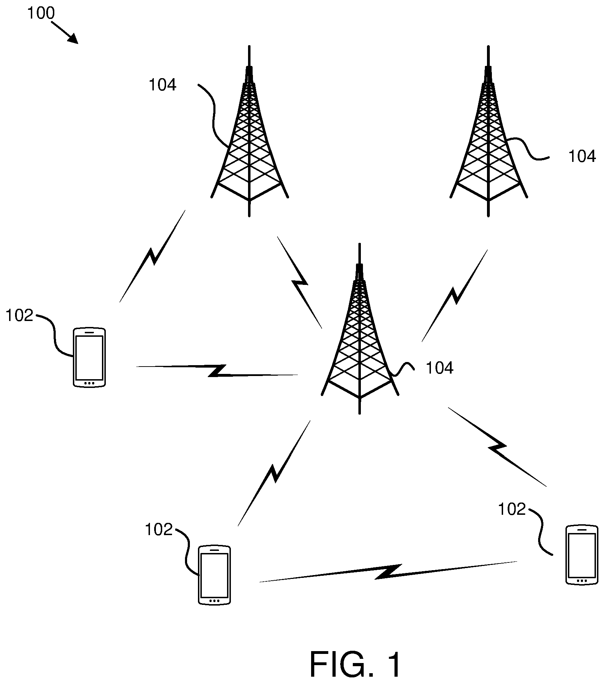

Figure 1 depicts an embodiment of a wireless communication system 100 for configuring beam measurements for a cell group. In one embodiment, the wireless communication system 100 includes remote units 102 and network units 104. Even though a specific number of remote units 102 and network units 104 are depicted in Figure 1, one of skill in the art will recognize that any number of remote units 102 and network units 104 may be included in the wireless communication system 100.

In one embodiment, the remote units 102 may include computing devices, such as desktop computers, laptop computers, personal digital assistants ("PDAs"), tablet computers, smart phones, smart televisions (e.g., televisions connected to the Internet), set-top boxes, game consoles, security systems (including security cameras), vehicle on-board computers, network devices (e.g., routers, switches, modems), aerial vehicles, drones, or the like. In some embodiments, the remote units 102 include wearable devices, such as smart watches, fitness bands, optical head-mounted displays, or the like. Moreover, the remote units 102 may be referred to as subscriber units, mobiles, mobile stations, users, terminals, mobile terminals, fixed terminals, subscriber stations, UE, user terminals, a device, or by other terminology used in the art. The remote units 102 may communicate directly with one or more of the network units 104 via UL communication signals. In certain embodiments, the remote units 102 may communicate directly with other remote units 102 via sidelink communication.

The network units 104 may be distributed over a geographic region. In certain embodiments, a network unit 104 may also be referred to and/or may include one or more of an access point, an access terminal, a base, a base station, a location server, a core network ("CN"), a radio network entity, a Node-B, an evolved node-B ("eNB"), a 5G node-B ("gNB"), a Home Node-B, a relay node, a device, a core network, an aerial server, a radio access node, an access point ("AP"), new radio ("NR"), a network entity, an access and mobility management function ("AMF"), a unified data management ("UDM"), a unified data repository ("UDR"), a UDM/UDR, a policy control function ("PCF"), a radio access network ("RAN"), a network slice selection function ("NSSF"), an operations, administration, and management ("OAM"), a session management function ("SMF"), a UPF, an application function, an authentication server function ("AUSF"), security anchor functionality ("SEAF"), trusted non-3GPP gateway function ("TNGF"), or by any other terminology used in the art. The network units 104 are generally part of a radio access network that includes one or more controllers communicably coupled to one or more corresponding network units 104. The radio access network is generally communicably coupled to one or more core networks, which may be coupled to other networks, like the Internet and public switched telephone networks, among other networks. These and other elements of radio access and core networks are not illustrated but are well known generally by those having ordinary skill in the art.

In one implementation, the wireless communication system 100 is compliant with NR protocols standardized in third generation partnership project ("3GPP"), wherein the network unit 104 transmits using an OFDM modulation scheme on the downlink ("DL") and the remote units 102 transmit on the uplink ("UL") using a single-carrier frequency division multiple access ("SC-FDMA") scheme or an orthogonal frequency division multiplexing ("OFDM") scheme. More generally, however, the wireless communication system 100 may implement some other open or proprietary communication protocol, for example, WiMAX, institute of electrical and electronics engineers ("IEEE") 802.11 variants, global system for mobile communications ("GSM"), general packet radio service ("GPRS"), universal mobile telecommunications system ("UMTS"), long term evolution ("LTE") variants, code division multiple access 2000 ("CDMA2000"), Bluetooth^{®}, ZigBee, Sigfox, among other protocols. The present disclosure is not intended to be limited to the implementation of any particular wireless communication system architecture or protocol.

The network units 104 may serve a number of remote units 102 within a serving area, for example, a cell or a cell sector via a wireless communication link. The network units 104 transmit DL communication signals to serve the remote units 102 in the time, frequency, and/or spatial domain.

In various embodiments, a remote unit 102 may receive configuration information for a cell group. The cell group includes at least one cell separate from a current serving cell. In some embodiments, the remote unit 102 may perform beam measurements at a physical layer. The beam measurements correspond to the cell group, the current serving cell, or a combination thereof. In certain embodiments, the remote unit 102 may determine, based on the beam measurements, a triggering event at the physical layer. The triggering event corresponds to a triggering cell. In various embodiments, the remote unit 102 may determine a type of reporting based on a configuration of the triggering cell. Accordingly, the remote unit 102 may be used for configuring beam measurements for a cell group.

In certain embodiments, a network unit 104 may transmit configuration information for a cell group. The cell group includes at least one cell separate from a current serving cell. In some embodiments, the network unit 104 may receive a report from a UE. The report corresponds to beam measurements via a type of reporting corresponding to a triggering cell, and the beam measurements correspond to the cell group, the current serving cell, or a combination thereof. Accordingly, the network unit 104 may be used for configuring beam measurements for a cell group.

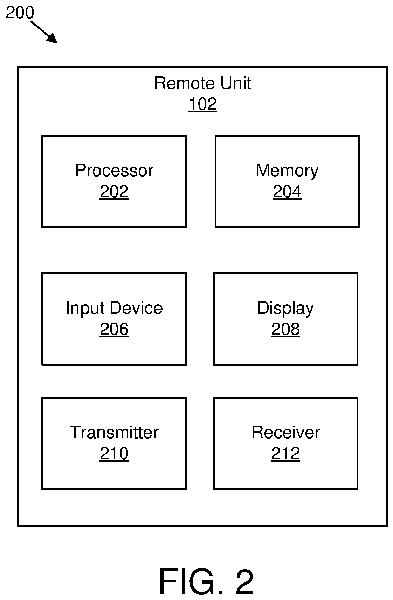

Figure 2 depicts one embodiment of an apparatus 200 that may be used for configuring beam measurements for a cell group. The apparatus 200 includes one embodiment of the remote unit 102. Furthermore, the remote unit 102 may include a processor 202, a memory 204, an input device 206, a display 208, a transmitter 210, and a receiver 212. In some embodiments, the input device 206 and the display 208 are combined into a single device, such as a touchscreen. In certain embodiments, the remote unit 102 may not include any input device 206 and/or display 208. In various embodiments, the remote unit 102 may include one or more of the processor 202, the memory 204, the transmitter 210, and the receiver 212, and may not include the input device 206 and/or the display 208.

The processor 202, in one embodiment, may include any known controller capable of executing computer-readable instructions and/or capable of performing logical operations. For example, the processor 202 may be a microcontroller, a microprocessor, a central processing unit ("CPU"), a graphics processing unit ("GPU"), an auxiliary processing unit, a field programmable gate array ("FPGA"), or similar programmable controller. In some embodiments, the processor 202 executes instructions stored in the memory 204 to perform the methods and routines described herein. The processor 202 is communicatively coupled to the memory 204, the input device 206, the display 208, the transmitter 210, and the receiver 212.

The memory 204, in one embodiment, is a computer readable storage medium. In some embodiments, the memory 204 includes volatile computer storage media. For example, the memory 204 may include a RAM, including dynamic RAM ("DRAM"), synchronous dynamic RAM ("SDRAM"), and/or static RAM ("SRAM"). In some embodiments, the memory 204 includes non-volatile computer storage media. For example, the memory 204 may include a hard disk drive, a flash memory, or any other suitable non-volatile computer storage device. In some embodiments, the memory 204 includes both volatile and non-volatile computer storage media. In some embodiments, the memory 204 also stores program code and related data, such as an operating system or other controller algorithms operating on the remote unit 102.

The input device 206, in one embodiment, may include any known computer input device including a touch panel, a button, a keyboard, a stylus, a microphone, or the like. In some embodiments, the input device 206 may be integrated with the display 208, for example, as a touchscreen or similar touch-sensitive display. In some embodiments, the input device 206 includes a touchscreen such that text may be input using a virtual keyboard displayed on the touchscreen and/or by handwriting on the touchscreen. In some embodiments, the input device 206 includes two or more different devices, such as a keyboard and a touch panel.

The display 208, in one embodiment, may include any known electronically controllable display or display device. The display 208 may be designed to output visual, audible, and/or haptic signals. In some embodiments, the display 208 includes an electronic display capable of outputting visual data to a user. For example, the display 208 may include, but is not limited to, a liquid crystal display ("LCD"), a light emitting diode ("LED") display, an organic light emitting diode ("OLED") display, a projector, or similar display device capable of outputting images, text, or the like to a user. As another, non-limiting, example, the display 208 may include a wearable display such as a smart watch, smart glasses, a heads-up display, or the like. Further, the display 208 may be a component of a smart phone, a personal digital assistant, a television, a table computer, a notebook (laptop) computer, a personal computer, a vehicle dashboard, or the like.

In certain embodiments, the display 208 includes one or more speakers for producing sound. For example, the display 208 may produce an audible alert or notification (e.g., a beep or chime). In some embodiments, the display 208 includes one or more haptic devices for producing vibrations, motion, or other haptic feedback. In some embodiments, all or portions of the display 208 may be integrated with the input device 206. For example, the input device 206 and display 208 may form a touchscreen or similar touch-sensitive display. In other embodiments, the display 208 may be located near the input device 206.

In certain embodiments, the receiver 212 to receive configuration information for a cell group. The cell group includes at least one cell separate from a current serving cell. In some embodiments, the processor 202 to: perform beam measurements at a physical layer, wherein the beam measurements correspond to the cell group, the current serving cell, or a combination thereof; determine, based on the beam measurements, a triggering event at the physical layer, wherein the triggering event corresponds to a triggering cell; and determine a type of reporting based on a configuration of the triggering cell.

Although only one transmitter 210 and one receiver 212 are illustrated, the remote unit 102 may have any suitable number of transmitters 210 and receivers 212. The transmitter 210 and the receiver 212 may be any suitable type of transmitters and receivers. In one embodiment, the transmitter 210 and the receiver 212 may be part of a transceiver.

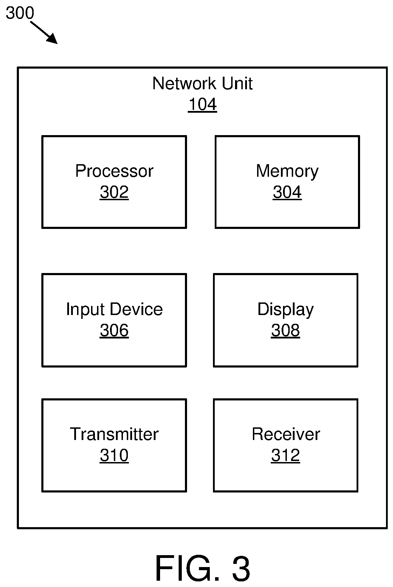

Figure 3 depicts one embodiment of an apparatus 300 that may be used for configuring beam measurements for a cell group. The apparatus 300 includes one embodiment of the network unit 104. Furthermore, the network unit 104 may include a processor 302, a memory 304, an input device 306, a display 308, a transmitter 310, and a receiver 312. As may be appreciated, the processor 302, the memory 304, the input device 306, the display 308, the transmitter 310, and the receiver 312 may be substantially similar to the processor 202, the memory 204, the input device 206, the display 208, the transmitter 210, and the receiver 212 of the remote unit 102, respectively.

In certain embodiments, the transmitter 310 to transmit configuration information for a cell group. The cell group includes at least one cell separate from a current serving cell. In some embodiments, the receiver 312 to receive a report from a UE. The report corresponds to beam measurements via a type of reporting corresponding to a triggering cell, and the beam measurements correspond to the cell group, the current serving cell, or a combination thereof.

It should be noted that one or more embodiments described herein may be combined into a single embodiment.

In certain embodiments, when a UE moves from a coverage area of one cell to another cell, at some point a serving cell change needs to be made since a current serving cell does not remain a viable radio option. The serving cell change may be triggered by layer 3 ("L3") measurements and may be done by a radio resource control ("RRC") signaling triggered reconfiguration with synchronization for a change of a primary cell ("PCell") and a primary secondary cell ("PSCell"). In some embodiments, there may be a release of SCells. In various embodiments, there may be complete layer 2 ("L2") and/or layer 1 ("L1") resets which may lead to longer latency, larger overhead, and longer interruption time than beam switch mobility. In certain embodiments, L1 and/or L2 mobility enhancements may enable a serving cell change via L1 and/or L2 signaling to reduce latency, overhead, and/or interruption time.

In various embodiments, a conditional PSCell change ("CPC") and/or conditional PSCell addition ("CPA") ("CPC/CPA"). A CPC/CPA-configured UE may release the CPC/CPA configurations if completing random access with transmissions towards a target PSCell. In such conditions, a UE may not have a chance to perform subsequent CPC/CPA without prior CPC/CPA reconfiguration and reinitialization instructions from a network. This may increase the delay for the cell change and increase signaling overhead (e.g., for frequent secondary cell group ("SCG") changes in a frequency range 2 ("FR2")). Therefore, multi radio access technology ("RAT") ("MR") dual connectivity ("DC") ("MR-DC") with selective activation of cell groups may enable subsequent CPC/CPA after a SCG change without reconfiguration and reinitialization on the CPC/CPA from the network. This may result in a reduction of signaling overhead and interrupting time for the SCG change.

In certain embodiments, conditional HO ("CHO") and MR-DC cannot be configured simultaneously. This may limit the usefulness of these two features when MR-DC is configured. In some embodiments, CHO and MR-DC may be configured simultaneously. In various embodiments, CHO + MR-DC may consider CHO including target master cell group ("MCG") and multiple candidate SCGs for CPC/CPA.

In some embodiments, RRC connected mobility may be defined.

Network controlled mobility may apply to UEs in an RRC_CONNECTED state and may be categorized into two types of mobility: cell level mobility and beam level mobility. Beam level mobility includes intra-cell beam level mobility and inter-cell beam level mobility.

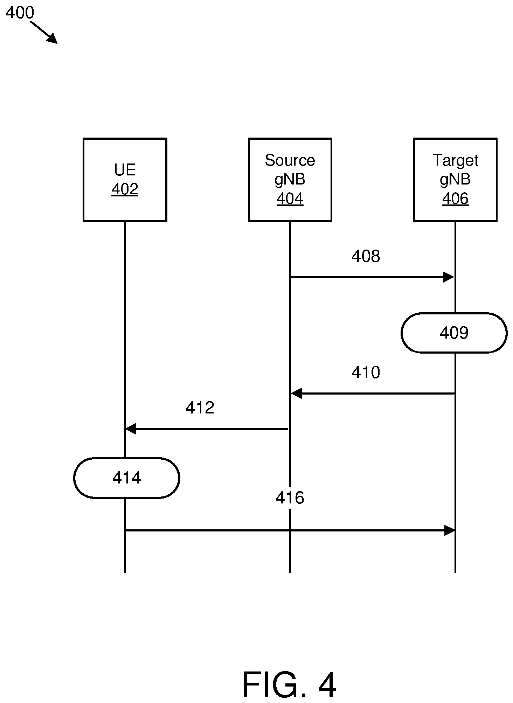

Cell level mobility may use explicit RRC signaling to be triggered (e.g., HO). For inter-gNB HO, signaling procedures include at least the elemental components illustrated in Figure 4.

Figure 4 is a schematic block diagram illustrating one embodiment of a system 400 for inter-gNB HO procedures. The system 400 includes a UE 402, a source gNB 404, and a target gNB 406. Each of the communications in the system 400 may include one or more messages.

In a first communication 408, the source gNB 404 initiates HO and issues a HANDOVER REQUEST over an Xn interface.

The target gNB 406 performs 409 admission control and, in a second communication 410, provides a new RRC configuration as part of a HANDOVER REQUEST ACKNOWLEDGE.

In a third communication 412, the source gNB 404 provides the RRC configuration to the UE 402 by forwarding the RRCReconfiguration message received in the HANDOVER REQUEST ACKNOWLEDGE. The RRCReconfiguration message includes at least a cell ID and all information required to access the target cell so that the UE 402 can access the target cell without reading system information. For some cases, the information required for contention-based and contention-free random access can be included in the RRCReconfiguration message. The access information to the target cell may include beam specific information, if any.

The UE 402 moves 414 the RRC connection to the target gNB 406 and, in a fourth communication 416, replies with a RRCReconfigurationComplete message. In some embodiments, user data may be sent in the fourth communication 416 if a grant allows this.

For dual active protocol stack ("DAPS") HO, the UE continues the downlink user data reception from the source gNB until releasing the source cell and continues the uplink user data transmission to the source gNB until successful random access procedure to the target gNB.

Only source and target PCell are used during DAPS HO. Carrier aggregation ("CA"), DC, supplementary uplink ("SUL"), multiple transmission and reception point ("TRP") ("multi-TRP"), ("EHC"), CHO, ("UDC"), NR sidelink configurations and vehicle to everything ("V2X") sidelink configurations are released by the source gNB before the HO command is sent to the UE and are not configured by the target gNB until the DAPS HO has completed (e.g., at earliest in the same message that releases the source PCell).

The HO mechanism triggered by RRC requires the UE at least to reset the medium access control ("MAC") entity and re-establish a radio link connection ("RLC"), except for DAPS HO, where upon reception of the HO command, the UE: 1) creates a MAC entity for target; 2) establishes the RLC entity and an associated dedicated traffic channel ("DTCH") logical channel for a target for each data radio bearer ("DRB") configured with DAPS; 3) for each DRB configured with DAPS, reconfigures a packet data convergence protocol ("PDCP") entity with separate security and robust header compression ("ROHC") functions for a source and a target and associates them with the RLC entities configured by the source and the target, respectively; and 4) retains the rest of the source configurations until there is a release of the source.

RRC managed HOs with and without PDCP entity re-establishment may both be supported. For DRBs using an RLC acknowledge mode ("AM") mode, PDCP can either be re-established together with a security key change or may initiate a data recovery procedure without a key change. For DRBs using an RLC unacknowledged mode ("UM") mode, PDCP can either be re-established together with a security key change or remain as it is without a key change. For a signaling radio bearer ("SRBs"), PDCP may either remain as it is and discard its stored PDCP protocol data units ("PDUs") and/or service data units ("SDUs") without a key change or be re-established together with a security key change.

In various embodiments, data forwarding, in-sequence delivery, and duplication avoidance at HO can be guaranteed if the target gNB uses the same DRB configuration as the source gNB.

A timer based HO failure procedure may be supported in NR. Moreover, an RRC connection re-establishment procedure may be used for recovering from HO failure except in certain CHO or DAPS HO scenarios: 1) when DAPS HO fails, the UE falls back to the source cell configuration, resumes the connection with the source cell, and reports DAPS HO failure via the source without triggering RRC connection re-establishment if the source link has not been released; and 2) when initial CHO execution attempt fails or HO overview fails, the UE performs cell selection, and if the selected cell is a CHO candidate and if the network configured the UE to try CHO after HO and/or CHO failure, then the UE attempts CHO execution once, otherwise re-establishment is performed. DAPS HO for FR2 to FR2 may not be supported.

The HO of an integrated access and backhaul ("IAB") mobile termination ("MT") ("IAB-MT") in a standalone ("SA") mode may follow the same procedure as described for a UE. After a backhaul has been established, the HO of the IAB-MT may be part of an intra central unit ("CU") ("intra-CU") topology adaptation procedure. Modifications to the configuration of a backhaul adaptation protocol ("BAP") sublayer and higher protocol layers above the BAP sublayer may be made.

Beam level mobility does not require explicit RRC signaling to be triggered. Beam level mobility may be within a cell or between cells, the latter is referred to as inter-cell beam management ("ICBM"). For ICBM, a UE can receive or transmit UE dedicated channels and/or signals via a TRP associated with a physical cell identifier ("ID") ("PCI") different from the PCI of a serving cell, while non-UE-dedicated channels and/or signals may only be received via a TRP associated with a PCI of the serving cell. The gNB provides, via RRC signaling, the UE with a measurement configuration containing configurations of synchronization signal block ("SSB") and/or channel state information ("CSI") resources and resource sets, and reports and trigger states for triggering channel and interference measurements and reports. For ICBM, a measurement configuration includes SSB resources associated with PCIs different from the PCI of a serving cell. Beam level mobility is then dealt with at lower layers by means of physical layer and MAC layer control signaling, and RRC is not required to know which beam is being used at a given point in time.

SSB-based beam level mobility may be based on an SSB associated with an initial downlink ("DL") bandwidth part ("BWP") and may only be configured for the initial DL BWPs and for DL BWPs containing the SSB associated with the initial DL BWP. For other DL BWPs, beam level mobility may only be performed based on a CSI reference signal ("RS") ("CSI-RS").

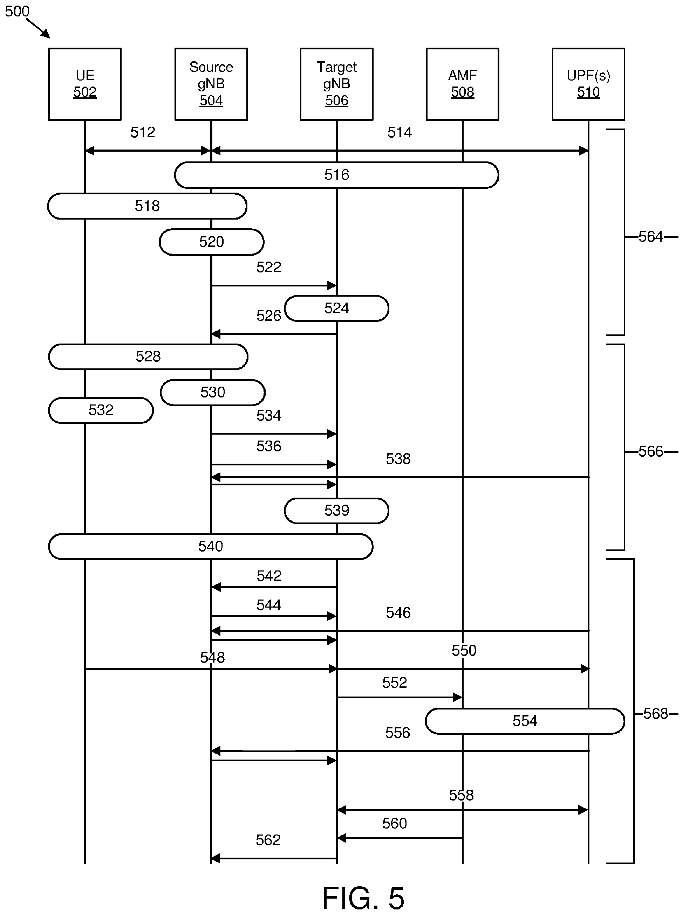

In certain embodiments, there may be HO procedures. In some embodiments, there may be C-Plane handling. In such embodiments, the intra-NR radio access network ("RAN") HO performs the preparation and execution phase of a HO procedure performed without involvement of a fifth generation cell ("5GC") (e.g., preparation messages are directly exchanged between the gNBs). The release of resources at a source gNB during a HO completion phase is triggered by a target gNB. Figure 5 depicts the basic HO scenario where neither an AMF nor a UPF changes.

Figure 5 is a schematic block diagram illustrating one embodiment of a system 500 for intra-AM and/or UPF HO. The system 500 includes a UE 502, a source gNB 504, a target gNB 506, an AMF 508, and a UPF 510 (e.g., one or more UPFs). Each of the communications in the system 500 may include one or more messages.

In a first communication 512 and a second communication 514, user data may be communicated.

In a third communication 516, the UE 502 context within the source gNB 504 contains information regarding roaming and access restrictions which were provided either at connection establishment or at a last timing advance ("TA") update.

In a fourth communication 518, the source gNB 504 configures the UE 502 measurement procedures and the UE 502 reports according to the measurement configuration.

The source gNB 504 decides 520 to HO the UE 502 based on a MeasurementReport and RRM information.

In a fifth communication 522, the source gNB 504 issues a HO request message to the target gNB 506 passing a transparent RRC container with necessary information to prepare the HO at the target side. The information includes at least the target cell ID, KgNB*, the cell radio network temporary identifier ("C-RNTI") of the UE 502 in the source gNB, RRM-configuration including UE inactive time, basic AS-configuration including antenna info and DL carrier frequency, the current quality of service ("QoS") flow to DRB mapping rules applied to the UE 502, the system information block 1 ("SIB1") from source gNB, the UE 502 capabilities for different RATs, PDU session related information, and may include the UE reported measurement information including beam-related information if available. The PDU session related information includes the slice information and QoS flow level QoS profiles. The source gNB 504 may also request a DAPS HO for one or more DRBs. After issuing a HO request, the source gNB 504 should not reconfigure the UE 502, including performing reflective QoS flow to DRB mapping.

Admission control may be performed 524 by the target gNB 506. Slice-aware admission control may be performed if the slice information is sent to the target gNB 506. If the PDU sessions are associated with non-supported slices, the target gNB 506 may reject such PDU sessions.

In a sixth communication 526, the target gNB 506 prepares the HO with L1 and/or L2 and sends the HANDOVER REQUEST ACKNOWLEDGE to the source gNB 504, which includes a transparent container to be sent to the UE 502 as an RRC message to perform the HO. The target gNB 506 also indicates if a DAPS HO is accepted. As soon as the source gNB 504 receives the HANDOVER REQUEST ACKNOWLEDGE, or as soon as the transmission of the HO command is initiated in the downlink, data forwarding may be initiated. For DRBs configured with DAPS, downlink PDCP SDUs are forwarded with a sequence number ("SN") assigned by the source gNB 504, until SN assignment is handed over to the target gNB 506, for which the normal data forwarding follows.

In a seventh communication 528, the source gNB 504 triggers the Uu HO by sending an RRCReconfiguration message to the UE 502 containing the information required to access the target cell: at least the target cell ID, the new C-RNTI, the target gNB 506 security algorithm identifiers for the selected security algorithms. It can also include a set of dedicated random access channel ("RACH") resources, the association between RACH resources and SSBs, the association between RACH resources and UE-specific CSI-RS configurations, common RACH resources, and system information of the target cell. For DRBs configured with DAPS, the source gNB 504 does not stop transmitting downlink packets until it receives the HANDOVER SUCCESS message from the target gNB 506. CHO cannot be configured simultaneously with DAPS HO. The source gNB 504 may deliver 530 buffered data and new data from UPFs. Moreover, the UE 502 may detach 532 from an old cell and synchronize to a new cell.

In an eight communication 534, for DRBs configured with DAPS, the source gNB 504 sends an EARLY STATUS TRANSFER message. The DL COUNT value conveyed in the EARLY STATUS TRANSFER message indicates PDCP SN and hyper frame number ("HFN") of the first PDCP SDU that the source gNB 504 forwards to the target gNB 506. The source gNB 504 does not stop assigning SNs to downlink PDCP SDUs until it sends the SN STATUS TRANSFER message to the target gNB 506.

In a nineth communication 536, for DRBs not configured with DAPS, the source gNB 504 sends the SN STATUS TRANSFER message to the target gNB 506 to convey the uplink PDCP SN receiver status and the downlink PDCP SN transmitter status of DRBs for which PDCP status preservation applies (e.g., for RLC acknowledge mode ("AM")). The uplink PDCP SN receiver status includes at least the PDCP SN of the first missing UL PDCP SDU and may include a bit map of the receive status of the out of sequence UL PDCP SDUs that the UE 502 needs to retransmit in the target cell, if any. The downlink PDCP SN transmitter status indicates the next PDCP SN that the target gNB 506 may assign to new PDCP SDUs, not having a PDCP SN yet. In case of DAPS HO, the uplink PDCP SN receiver status and the downlink PDCP SN transmitter status for a DRB with RLC AM ("RLC-AM") and not configured with DAPS may be transferred by the SN STATUS TRANSFER message. For DRBs configured with DAPS, the source gNB may additionally send the EARLY STATUS TRANSFER messages to inform discarding of already forwarded PDCP SDUs. The target gNB 506 does not transmit forwarded downlink PDCP SDUs to the UE 502, whose COUNT is less than the conveyed DL COUNT value and discards them if transmission has not been attempted already.

In a tenth communication 538, user data may be communicated. Moreover, the target gNB 506 may buffer 539 the user data from the source gNB 504.

In an eleventh communication 540, the UE 502 synchronizes to the target cell and completes the RRC HO procedure by sending an RRCReconfigurationComplete message to the target gNB 506. In case of DAPS HO, the UE 502 does not detach from the source cell upon receiving the RRCReconfiguration message. The UE 502 releases the source resources and configurations and stops DL and/or UL reception and/or transmission with the source upon receiving an explicit release from the target node. From RAN point of view, the DAPS HO is considered to only be completed after the UE 502 has released the source cell as explicitly requested from the target node. For RRC suspend, a subsequent HO or inter-RAT HO cannot be initiated until the source cell has been released.

In a twelfth communication 542 and/or a thirteenth communication 544, in case of DAPS HO, the target gNB 506 sends a HANDOVER SUCCESS message to the source gNB 504 to inform that the UE 502 has successfully accessed the target cell. In return, the source gNB 504 sends the SN STATUS TRANSFER message for DRBs configured with DAPS, and the normal data forwarding follows. The uplink PDCP SN receiver status and the downlink PDCP SN transmitter status are also conveyed for DRBs with RLC unacknowledged mode ("UM") ("RLC-UM") in the SN STATUS TRANSFER message, if configured with DAPS.

For DRBs configured with DAPS, the source gNB 504 does not stop delivering uplink QoS flows to the UPF until it sends the SN STATUS TRANSFER message in step 8b. The target gNB does not forward QoS flows of the uplink PDCP SDUs successfully received in-sequence to the UPF 510 until it receives the SN STATUS TRANSFER message, in which UL HFN and the first missing SN in the uplink PDCP SN receiver status indicates the start of uplink PDCP SDUs to be delivered to the UPF 510. The target gNB 506 does not deliver any uplink PDCP SDUs which has an UL COUNT lower than the provided.

In a fourteenth communication 546, a fifteenth communication 548, and a sixteenth communication 550, user data is transmitted.

In a seventeenth communication 552, the target gNB 506 sends a PATH SWITCH REQUEST message to the AMF 508 to trigger the 5GC to switch the DL data path towards the target gNB 506 and to establish an ("NG-C") interface instance towards the target gNB 506.

In an eighteenth communication 554, 5GC switches the DL data path towards the target gNB 506. In a nineteenth communication 556, the UPF 510 sends one or more "end marker" packets on the old path to the source gNB 504 per PDU session and/or tunnel and then can release any user plane ("U-plane") and/or TNL resources towards the source gNB 502.

In a twentieth communication 558, user data may be communicated.

In a twenty-first communication 560, the AMF 508 confirms the PATH SWITCH REQUEST message with a PATH SWITCH REQUEST ACKNOWLEDGE message.

Upon reception of the PATH SWITCH REQUEST ACKNOWLEDGE message from the AMF 508, in a twenty-second communication 562, the target gNB 506 sends a UE CONTEXT RELEASE to inform the source gNB 504 about the success of the HO. The source gNB 504 can then release radio and C-plane related resources associated with the UE context. Any ongoing data forwarding may continue. In the system 500 of Figure 5, some steps 564 may correspond to HO preparation, certain steps 566 may correspond to HO execution, and other steps 568 may correspond to HO completion.

The RRM configuration may include both beam measurement information (e.g., for L3 mobility) associated with SSBs and CSI-RSs for the reported cells if both types of measurements are available. Also, if CA is configured, the RRM configuration may include the list of best cells on each frequency for which measurement information is available, and the RRM measurement information can also include the beam measurement for the listed cells that belong to the target gNB.

The common RACH configuration for beams in the target cell is only associated with the SSBs. The network can have dedicated RACH configurations associated with the SSBs and/or have dedicated RACH configurations associated with CSI-RSs within a cell. The target gNB can only include one of the following RACH configurations in the HO command to enable the UE to access the target cell: 1) common RACH configuration; 2) common RACH configuration + dedicated RACH configuration associated with SSB; and 3) common RACH configuration + dedicated RACH configuration associated with CSI-RS.

The dedicated RACH configuration allocates RACH resources together with a quality threshold to use them. When dedicated RACH resources are provided, they are prioritized by the UE and the UE may not switch to contention-based RACH resources as long as the quality threshold of those dedicated resources is met. The order to access the dedicated RACH resources is up to UE implementation.

Upon receiving a HO command requesting DAPS HO, the UE suspends source cell SRBs, stops sending and receiving any RRC control plane signaling toward the source cell, and establishes SRBs for the target cell. The UE releases the source cell SRBs configuration upon receiving source cell release indication from the target cell after successful DAPS HO execution. When DAPS HO to the target cell fails and, if the source cell link is available, then the UE reverts back to the source cell configuration and resumes source cell SRBs for control plane signaling transmission.

In some embodiments, there may be enhanced mobility with objectives to specify mechanism and procedures of L1 and/or L2 based inter-cell mobility for mobility latency reduction that may include: 1) configuration and maintenance for multiple candidate cells to allow fast application of configurations for candidate cells; 2) dynamic switch mechanism among candidate serving cells (e.g., including SpCell and secondary cell ("SCell")) for the potential applicable scenarios based on L1 and/or L2 signaling; 3) L1 enhancements for inter-cell beam management, including L1 measurement and reporting, and beam indication; 4) TA management; and/or 5) centralized unit-distributed unit ("CU-DU") interface signaling to support L1 and/or L2 mobility. It should be noted that FR2 specific enhancements are not precluded, and that the procedure of L1 and/or L2 based inter-cell mobility may be applicable to the following scenarios: 1) standalone, CA, and NR-DC with a serving cell change within one configured grant ("CG"); 2) intra-DU and intra-CU inter-DU (e.g., applicable for standalone and CA: no new RAN interfaces are expected); 3) both intra-frequency and inter-frequency; 4) both FR1 and FR2; and/or 5) source and target cells may be synchronized or non-synchronized.

In various embodiments, there may be mechanism and procedures of L1 and/or L2 based inter-cell mobility for mobility latency reduction.

In a first embodiment, there may be the following elements for a mobility procedure: 1) measurement configuration; 2) measurement; 3) measurement reporting; and/or 4) a network decision and/or response.

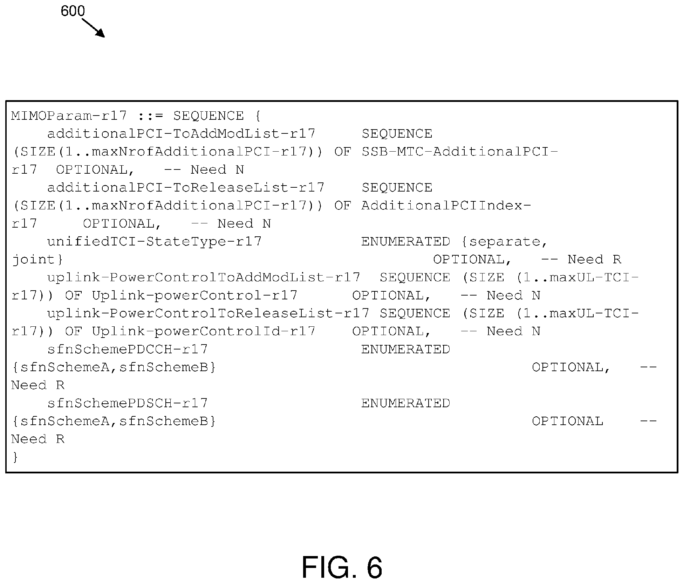

For the measurement configuration, additional cells may be defined. The additional cells may be cells that are configured not part of a serving cell configuration but as part of a cell group configuration. This may include adding multiple input multiple output ("MIMO") parameters ("MIMO-Parameters") at a top level of a cell group configuration. One embodiment of the MIMO-Parameters are shown in Figure 6.

Figure 6 is a block diagram 600 illustrating one embodiment of MIMO parameters containing additional cells.

The cell group configuration allows the additional cells to be shared by an entire cell group. Further, the cell group configuration acts as a multi-TRP situation where some TRPs belong to additional cells that are not yet serving cells but can become a serving cell in response to a measurement trigger. The beams (e.g., TCI-States) belonging to these additional cells may be provided using any suitable means (e.g., BWP-Downlink -> BWP- DownlinkDedicated -> PDSCH-Config -> TCI-states -> additonalPCI). For signaling purposes, additional cells may be indexed from 1 to N, where N additional cells are configured or from X to X+N, where there are X-1 serving cells configured at the point of time.

In some embodiments, additional cells are defined as part of an Scell configuration and an SpCell configuration (e.g., defined inside MIMO-Parameters of ServingCellConfig) with the following conditions and/or features: 1) an additional cell from an SCell can be added as (or replace) SCell using an L1 and/or L2 procedure; 2) an additional cell from an SpCell can be added as (or replace) SpCell using an L1 and/or L2 procedure; 3) an additional cell of a PCell can replace a current PCell; and/or 4) an additional cell of a PSCell can replace a current PSCell. For signaling purposes additional cells are indexed from 1 to N, where N additional cells are configured or from X to X+N, where there are X-1 serving cells configured at the point of time.

In various embodiments, a new RRC configuration is used to indicate with each additional cell (or a group of additional cells, e.g., if the additional cells are added directly to the cell group config) if the mobility to the cell needs RRC based measurement reporting (or not) and/or RRC based mobility (e.g., reconfigurationwithSync). RRC based measurement reporting may be required if the mobility to the additional cell will need a change of security keys. For this purpose, a Boolean flag e.g., "RRC based" can be added to a corresponding additional cell (or group of additional cells) while configuring the cell and/or cell-group.

In certain embodiments, transmission configuration indicator ("TCI") configuration and activation of the additional cells may be made (e.g., their configuration in the may follow an RRC + MAC + Phy (DCI) model). In some embodiments, an RRC configured lower layer with new information described herein and other configuration information may be made.

In various embodiments, new measurements may be made. In such embodiments, there may be new measurement events (e.g., triggering events) such as: 1) Event A1_L1 (e.g., a beam of a serving cell becomes better than a threshold); 2) Event A2_L1 (e.g., a beam of a serving cell becomes worse than a threshold); 3) Event A3_L1 (e.g., a beam of an additional cell becomes offset better than a best beam of a SpCell); 4) Event A4_L1 (e.g., a beam of an additional cell becomes better than a threshold); 5) Event A5_L1 (e.g., a first beam of an SpCell becomes worse than a first threshold and a second beam of an additional cell becomes better than a second threshold); and/or 6) Event A6_L1 (e.g., a beam of an additional cell becomes offset better than a best beam of an SCell). Further, in such embodiments there may be a measurement configuration with information elements ("IEs") that indicate a threshold, a hysteresis, a time to trigger, and so forth configured by RRC to L1 or MAC.

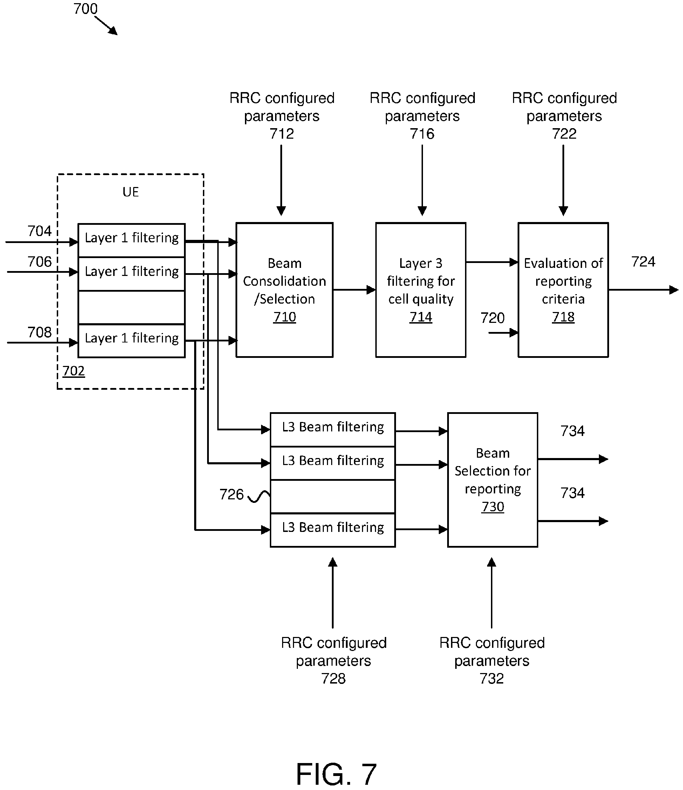

In certain embodiments, a new measurement event may be evaluated, such as using a mix of functionalities in a physical ("Phy") and RRC layer (e.g., as shown in Figure 7).

Figure 7 is a schematic block diagram illustrating one embodiment of a measurement model in a system 700. The system 700 includes a UE 702 that receives inputs (A) that include a first gNB beam 704, a second gNB beam 706, and up to K gNB beams 708. The UE 702 applies L1 filtering to the inputs to provide outputs (A¹). The UE 702 provides the outputs to a beam consolidation and/or selection 710 function. The beam consolidation and/or selection 710 device also receives RRC configured parameters 712 to produce an output (e.g., cell quality, B) that is provided to a L3 filtering for cell quality 714 function. Moreover, the L3 filtering for cell quality 714 device also receives RRC configured parameters 716 to produce an output (C) that is provided to an evaluation of reporting criteria 718 function. Further, the evaluation of reporting criteria 718 function receives a second input (C¹) 720 and RRC configured parameters 722 to produce an output (D) 724. The UE 702 also provides its outputs to an L3 beam filtering 726 function that performs L3 beam filtering. The L3 beam filtering 726 function also receives RRC configured parameters 728 to produce an output (E) of K beams that are provided to a beam selection for reporting 730 function. Moreover, the beam selection for reporting 730 function also receives RRC configured parameters 732 to produce an output (F) 734 of X beams. In various embodiments, filtering among a plurality of parameters may include examining values associated with those parameters and selecting a subset of the parameters based on the examined values. Particularly, beam filtering herein may include examining signal strengths obtained while applying spatial filters associated with a plurality of beams, and then selecting one or multiple beams with the highest associated signal strengths. If not explicitly mentioned, the term "filtering" herein may refer to beam filtering. If filtering is performed by the physical layer, data link layer, or RRC, the filtering may be referred to as L1 filtering, L2 filtering, or L3 filtering, respectively. L1 and/or L2 filtering may be performed faster than L3 filtering at the cost of reliability.

In various embodiments, different measurement models may be used for an L1 and/or L2 based mobility procedure, such as: 1) a first model in which measurement events are evaluated at a Phy layer for a short time and an L1 measurement report is sent to a gNB - according to this model, the Phy layer directly uses the beam measurements and, after filtering, determines if any of the events (e.g., triggering events) configured by RRC are met (e.g., triggered); and/or 2) a second model in which measurement events are evaluated at a MAC - according to this mode, the functionality of RRC, as shown in Figure 7, are adopted by the MAC. The L3 filtering may or may not be applied depending on the RRC measurement configuration.

In certain embodiments, there may be a certain measurement reporting.

In one embodiment, there may be reporting using a Phy layer. Moreover, in one implementation, the Phy layer reports the best beam of a corresponding additional cell. This may be based on event trigger conditions in response to one or more events being triggered (e.g., one or more thresholds being met). The device may implement periodic reporting configured by RRC. Since the reporting is done directly at the Phy layer, it may be performed faster than L3 reporting. As may be appreciated, the measurement values obtained at the Phy layer may not be considered very stable without L3 filtering. In some embodiments, a network may configure whether a L1 and/or L2 based mobility is used or only L3 mobility may be used - depending on UE mobility (e.g., low mobility vs. high mobility), spectrum available (e.g., FR2 available or not), UE capability, scattering environment, and so forth. In one example, if a UE indicates a high-mobility feature to the network, for example a high-speed train/vehicle, the network may configure an L1/L2-based mobility procedure instead of a mobility procedure solely based on L3. In another example, the OAM or another network entity may pre-configure a gNB RRC to configure all UEs (or only high-speed UEs in an alternative example) in an urban area and/or when connecting on an FR2 band. In these examples, a faster mobility procedure than L3 mobility may be preferred. Once measurement results are available, actual reporting may be done using: 1) a physical uplink control channel ("PUCCH") based on a PUCCH format that uses spatial relation information ("PUCCH-SpatialRelationInfo") of the serving cell and/or of the cell group containing an additional cell; or 2) an additional cell set based sounding reference signal ("SRS") spatial relation indication medium access control control element ("MAC CE") may be used.

In various embodiments, there may be reporting using a MAC. In such embodiments, RACH + MAC CE may be used for a cell change indication (e.g., to an additional cell). If a measurement report needs to be sent, the MAC either: 1) initiates a contention free random access ("CFRA") if the suitable beam of the additional cell has been assigned dedicated RACH resources - a successful completion of a RACH procedure indicates a successful mobility to the additional cell; or 2) using contention based random access ("CBRA") in which the MAC initiates transmission of a measurement report MAC CE containing additional cell IDs and the corresponding suitable and/or best beams. A physical downlink control channel ("PDCCH") message received on the same hybrid automatic repeat request ("HARQ") process used to send MAC CE may be used by a serving gNB to indicate a cell change confirmation. A MAC CE may contain an indication of a best beam (e.g., TCI state) and an index of a corresponding additional cell.

In certain embodiments, there may be reporting using RRC. If an additional cell belongs to another CU, it is configured with RRC based mobility required (e.g., a Boolean flag like "RRC based" indication). RRC performs measurement reporting based on various possible procedures. A similar procedure may be applied to an integrated access and backhaul ("IAB") system when an IAB node performs an HO from a first serving cell of a first parent IAB node to a second serving cell of a second parent IAB node, wherein the first and second parent IAB nodes are configured by different IAB donor CUs.

In some embodiments, a network response may include: 1) information corresponding to L1 mobility via PDCCH received on a same HARQ process used to send MAC CE for mobility - a measurement report may conclude L1 mobility; 2) information indicating an L2 reconfiguration from the network - the gNB upon receiving one or more L1 measurement reports can add a new SCell or change the SpCell with or without HO (e.g., reconfiguration with synchronization) - a MAC CE may be used - the gNB sends a MAC CE adding and/or replacing a new list of cells (e.g., converting additional cells to an Scell and/or an SpCell); and/or 3) information indicating an L3 reconfiguration from the network. A security change may be performed if the gNB sends an L3 HO CMD (e.g., reconfiguration with synchronization). A physical cell ID and frequency of an additional cell to which mobility (e.g., PCell) is being performed is used for derivation of new security keys.

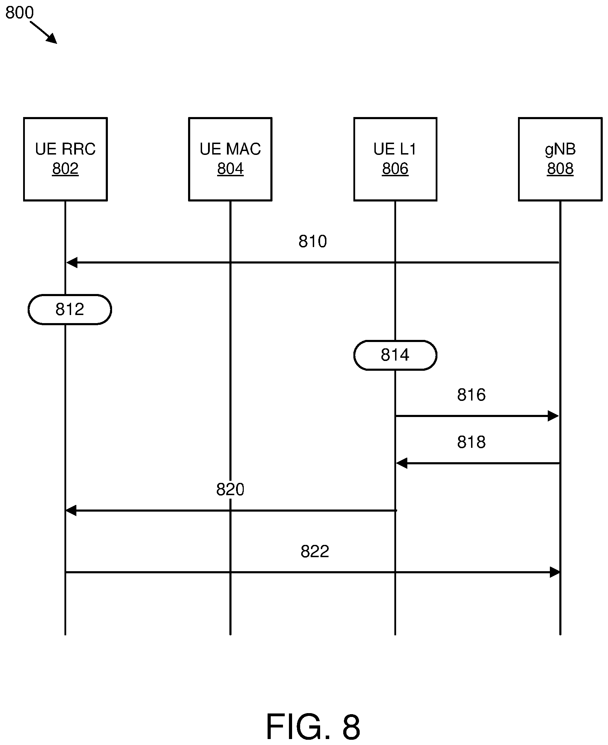

A second embodiment may be based on features found in the first embodiment. In such an embodiment, a gNB configures a UE using elements of the first embodiment. As shown in Figure 8, a UE RRC configures lower layers accordingly. The Phy layer of the UE starts measurements (e.g., beam specific samples) internal to the Phy layer, and performs L1 filtering (e.g., internal L1 filtering of the inputs). In certain embodiments, beam specific measurements are consolidated to derive cell quality or measurement events described herein are evaluated directly based on beam measurements (e.g., after L1 filtering). A triggered event initiates notification to the gNB using a physical channel (e.g., PUCCH), and the UE selects a suitable beam for the corresponding additional cell and reports the cell index on a related PUCCH cell (e.g., SpCell or PUCCH cell of a cell group). In some embodiments, an additional cell set based SRS spatial relation indication MAC CE may be used. An uplink spatial relation may include an uplink spatial relation information parameter or a TCI state comprising a QCL relationship. Moreover, in various embodiments, the gNB confirms a cell change either by adding a cell X as an SCell or replacing a current SpCell with the cell X, if no security change is required. If a security change is required, the gNB may initiate a HO procedure by transmitting a reconfigurationWithSync message (e.g., HO CMD) to the UE.

Figure 8 is a schematic block diagram illustrating one embodiment of a system 800 that uses L1 based mobility. The system 800 includes a UE RRC 802, a UE MAC 804, a UE L1 806, and a gNB 808. Each of the communications illustrated may include one or more messages.

In a first communication 810, a new RRC configuration is transmitted. The new RRC configuration may include additional cells X and Y. The UE RRC 802 configures 812 L1 and L2. The UE L1 806 monitors 814 for a measurement event.

In a second communication 816, a PUCCH message is transmitted in response to the measurement event. The PUCCH message may include information indicating the additional cell X (e.g., the cell that caused the measurement event).

In a third communication 818, a L1 HO message is transmitted. The L1 HO message may include information indicating the additional cell X (e.g., the cell for HO).

In a fourth communication 820, a mobility message is communicated. The mobility message may indicate that cell X is added as an SCell or PCell.

In a fifth communication 822, an L1 mobility complete message may be communicated.

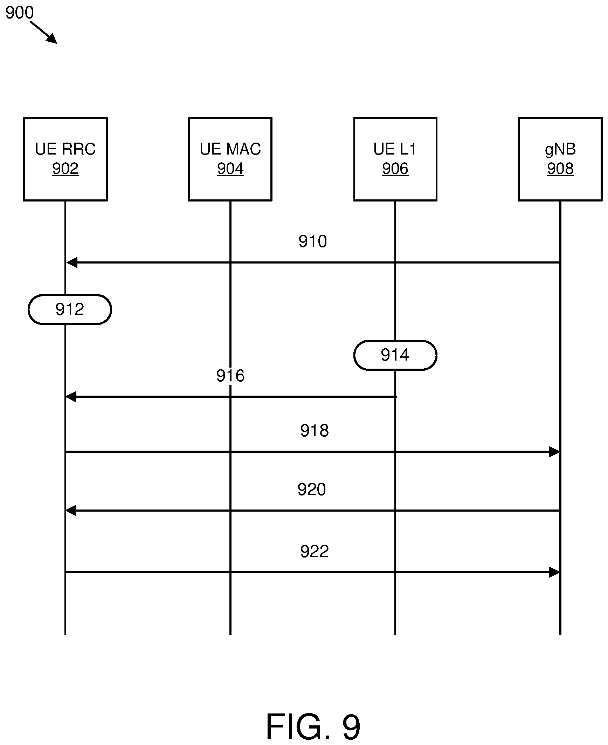

A third embodiment may be based on features found in the first embodiment. In such an embodiment, a gNB configures a UE using elements of the first embodiment. As shown in Figure 9, UE RRC configures the lower layers accordingly. The Phy layer of the UE starts measurements (e.g., beam specific samples) internal to the Phy layer and thereafter performs L1 filtering (e.g., internal L1 filtering of the inputs). Beam specific measurements are consolidated to derive cell quality and L1 realizes that the triggering beam is marked for "report to RRC", thereafter L1 reports the beam measurements to RRC. In various embodiments, RRC may configure directly L1 on beams belonging to each cell for which L1 is supposed to perform measurements and configures which cells are configured for "report to RRC". If the triggering cell is not among the cells configured with "report to RRC", the second embodiment solution is used. RRC either performs beam consolidation, cell quality evaluation, L3 filtering and evaluation of reporting criteria before reporting measurement (e.g., event) with a transmission to a gNB; or it directly reports the additional cell X measurement values corresponding to the best reported beam from L1 to the gNB - without any further evaluation.

Figure 9 is a schematic block diagram illustrating one embodiment of a system 900 that uses L1 supported mobility with a security key change. The system 900 includes a UE RRC 902, a UE MAC 904, a UE L1 906, and a gNB 908. Each of the communications illustrated may include one or more messages.

In a first communication 910, a new RRC configuration is transmitted. The new RRC configuration may include additional cells X (e.g., RRC based) and Y (e.g., L1 and/or MAC based). The UE RRC 902 configures 912 L1 and L2. The UE L1 906 monitors 914 for a measurement event (e.g., in one example cell X triggers an event).

In a second communication 916, a cell X event is reported by L1 to L3 after L1 filtering.

In a third communication 918, a measurement report is sent (e.g., indicating cell X).

In a fourth communication 920, HO CMD is transmitted. The HO CMD may indicate a reconfiguration with synchronization (e.g., indicating cell X).

In a fifth communication 922, a reconfiguration complete (e.g., HO complete) message may be communicated.

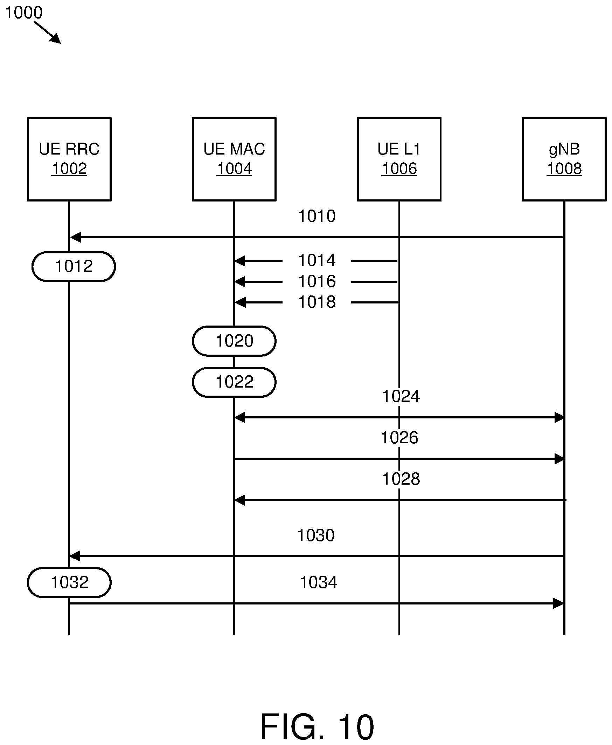

A fourth embodiment may be based on features found in the first embodiment. In such an embodiment, a gNB configures a UE using elements of the first embodiment. As shown in Figure 10, UE RRC configures lower layers accordingly. The Phy layer of the UE starts measurements (e.g., by obtaining beam specific samples from the signals received on reference signal resources) internal to the Phy layer and thereafter performs L1 filtering (e.g., internal L1 filtering of the inputs). Filtered L1 measurements are reported to MAC which does beam consolidation and measurement reporting evaluation. When a measurement report needs to be sent, a MAC initiates either: 1) a CFRA if the suitable beam of the additional cell has been assigned dedicated RACH resources - a successful completion of RACH procedure indicates a successful mobility to the new additional cell; or 2) a MAC initiates transmission of a measurement report MAC CE containing the additional cell IDs and the corresponding suitable and/or best beams. The MAC CE may contain a measurement report MAC CE.

In certain embodiments, the measurement report MAC CE is identified by a MAC subheader with a new enhanced logical channel identifier ("LCID") ("eLCID"). It may have a variable size with the following fields: 1) activate and/or deactivate ("A/D"): this field indicates whether to add, activate, delete, and/or deactivate an indicated beam - the field may be set to 1 to indicate activation, otherwise it may indicate deactivation; 2) TCI state serving cell IDᵢ: this field indicates the identity of the serving cell on which the TCI state used for SRS resource i is located - the length of the field may be 5 bits; 3) TCI state IDᵢ: this field contains an identifier of the TCI state used for SRS resource I - TCI state ID₀ refers to the first SRS resource within the resource set, TCI state ID1 refers to the second one, and so on - if a joint and/or downlink TCI state is used, there may be a 7-bits length TCI state ID - if a separate downlink and uplink TCI state is used, the most significant bit of TCI state ID is considered as a reserved bit and the remaining 6 bits indicate the UL-TCIState-Id - the length of the field may be 7 bits - this field is only present if MAC CE is used for activation of semi-persistent ("SP") SRS resource set (e.g., the A/D field is set to 1, or for AP SRS resource set); and 4) R: reserved bit, set to 0.

In some embodiments, the gNB responds with a bitmap indicating which serving and additional cells are considered added and/or active and which are deleted and/or deactivated; or an additional cell index (or indices) that are being added and/or active. The gNB may also initiate an RRC procedure to effect the change of serving cells.

Figure 10 is a schematic block diagram illustrating one embodiment of a system 1000 that uses L2 based mobility. The system 1000 includes a UE RRC 1002, a UE MAC 1004, a UE L1 1006, and a gNB 1008. Each of the communications illustrated may include one or more messages.

In a first communication 1010, a new RRC configuration is transmitted. The new RRC configuration may include additional cells X and Y. The UE RRC 1002 configures 1012 L1 and L2.

In a second communication 1014, a third communication 1016, and a fourth communication 1018 measurement reports may be sent.

The UE MAC 1004 performs 1020 performs beam consolidation. Moreover, the UE MAC 1004 monitors 1022 for a measurement event (e.g., in one example cell X triggers an event).

In a fifth communication 1024, CFRA is performed on a suitable beam of cell X.

In a sixth communication 1026, a measurement report MAC CE is sent.

In a seventh communication 1028, a cell configuration MAC CE is sent.

In an eighth communication 1030, an RRC reconfiguration message is sent.

The UE RRC 1002 configures 1032 L1 and L2.

In a nineth communication 1034, an RRC reconfiguration complete message may be communicated.

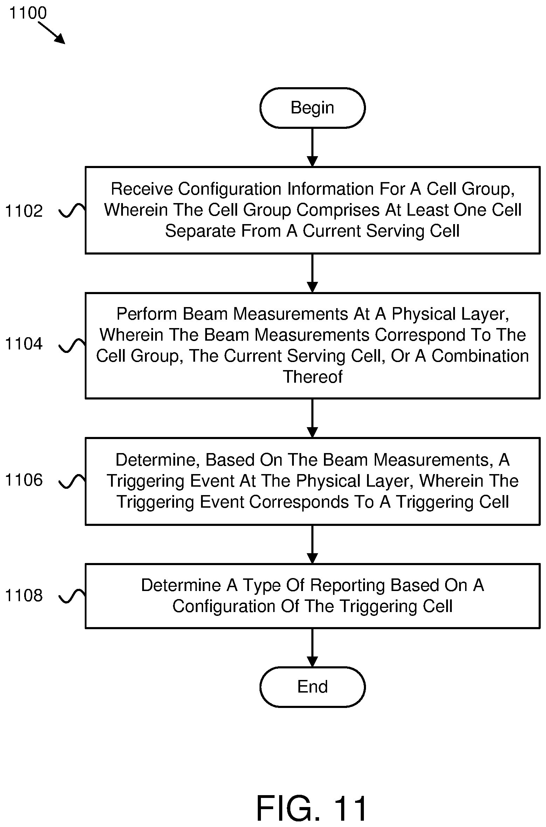

Figure 11 is a flow chart diagram illustrating one embodiment of a method 1100 for configuring beam measurements for a cell group. In some embodiments, the method 1100 is performed by an apparatus, such as the remote unit 102. In certain embodiments, the method 1100 may be performed by a processor executing program code, for example, a microcontroller, a microprocessor, a CPU, a GPU, an auxiliary processing unit, a FPGA, or the like.

In various embodiments, the method 1100 includes receiving 1102 configuration information for a cell group. The cell group includes at least one cell separate from a current serving cell. In some embodiments, the method 1100 includes performing 1104 beam measurements at a physical layer. The beam measurements correspond to the cell group, the current serving cell, or a combination thereof. In certain embodiments, the method 1100 includes determining 1106, based on the beam measurements, a triggering event at the physical layer. The triggering event corresponds to a triggering cell. In various embodiments, the method 1100 includes determining 1108 a type of reporting based on a configuration of the triggering cell.

In certain embodiments, the method 1100 further comprises transmitting a report corresponding to the beam measurements using the determined type of reporting. In some embodiments, the method 1100 further comprises, in response to transmitting the report corresponding to the beam measurements, receiving a mobility message confirming mobility of the UE. In various embodiments, the configuration of the triggering cell comprises RRC reporting or lower layer reporting.

In one embodiment, the configuration information comprises at least one triggering event. In certain embodiments, the configuration information comprises configuration of a first set of cells that use RRC reporting and a second set of cells that use lower layer reporting.

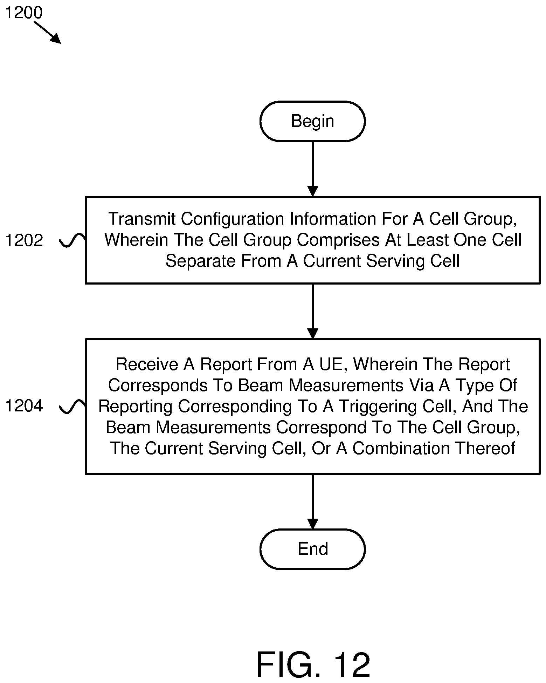

Figure 12 is a flow chart diagram illustrating another embodiment of a method 1200 for configuring beam measurements for a cell group. In some embodiments, the method 1200 is performed by an apparatus, such as the network unit 104. In certain embodiments, the method 1200 may be performed by a processor executing program code, for example, a microcontroller, a microprocessor, a CPU, a GPU, an auxiliary processing unit, a FPGA, or the like.

In various embodiments, the method 1200 includes transmitting 1202 configuration information for a cell group. The cell group includes at least one cell separate from a current serving cell. In some embodiments, the method 1200 includes receiving 1204 a report from a UE. The report corresponds to beam measurements via a type of reporting corresponding to a triggering cell, and the beam measurements correspond to the cell group, the current serving cell, or a combination thereof.

In certain embodiments, the method 1200 further comprises, in response to receiving the report corresponding to the beam measurements, transmitting a mobility message confirming mobility of the UE. In some embodiments, the type of reporting corresponding to the triggering cell comprises RRC reporting or lower layer reporting.

In various embodiments, the configuration information comprises at least one triggering event. In one embodiment, the configuration information comprises configuration of a first set of cells that use RRC reporting and a second set of cells that use lower layer reporting.

In certain embodiments, the network device determines the configuration information based on a high-mobility indication of the UE, a carrier frequency of the at least one cell, a deployment scenario of the network device, or a combination thereof. In some embodiments, the determining is configured by an OAM entity. In various embodiments, the high-mobility indication of the UE may indicate that the UE is in a high-speed train, a high-speed vehicle, or a non-terrestrial vehicle.

In one embodiment, the determining is based on determining that the carrier frequency is in a FR2 band or a millimeter-wave band. In certain embodiments, the determining is based on determining that the deployment scenario is indicated 'urban', 'macro urban', or 'micro urban'.

In one embodiment, an apparatus comprises: a receiver to receive configuration information for a cell group, wherein the cell group comprises at least one cell separate from a current serving cell; and a processor to: perform beam measurements at a physical layer, wherein the beam measurements correspond to the cell group, the current serving cell, or a combination thereof; determine, based on the beam measurements, a triggering event at the physical layer, wherein the triggering event corresponds to a triggering cell; and determine a type of reporting based on a configuration of the triggering cell.

In certain embodiments, an apparatus further comprises a transmitter to transmit a report corresponding to the beam measurements using the determined type of reporting.

In some embodiments, the receiver further to, in response to the transmitter transmitting the report corresponding to the beam measurements, receive a mobility message confirming mobility of the UE.

In various embodiments, the configuration of the triggering cell comprises RRC reporting or lower layer reporting.

In one embodiment, the configuration information comprises at least one triggering event.

In certain embodiments, the configuration information comprises configuration of a first set of cells that use RRC reporting and a second set of cells that use lower layer reporting.

In one embodiment, a method at a UE, the method comprises: receiving configuration information for a cell group, wherein the cell group comprises at least one cell separate from a current serving cell; performing beam measurements at a physical layer, wherein the beam measurements correspond to the cell group, the current serving cell, or a combination thereof; determining, based on the beam measurements, a triggering event at the physical layer, wherein the triggering event corresponds to a triggering cell; and determining a type of reporting based on a configuration of the triggering cell.

In certain embodiments, the method further comprises transmitting a report corresponding to the beam measurements using the determined type of reporting.

In some embodiments, the method further comprises, in response to transmitting the report corresponding to the beam measurements, receiving a mobility message confirming mobility of the UE.

In various embodiments, the configuration of the triggering cell comprises RRC reporting or lower layer reporting.

In one embodiment, the configuration information comprises at least one triggering event.

In certain embodiments, the configuration information comprises configuration of a first set of cells that use RRC reporting and a second set of cells that use lower layer reporting.

In one embodiment, an apparatus comprises: a transmitter to transmit configuration information for a cell group, wherein the cell group comprises at least one cell separate from a current serving cell; and a receiver to receive a report from a UE, wherein the report corresponds to beam measurements via a type of reporting corresponding to a triggering cell, and the beam measurements correspond to the cell group, the current serving cell, or a combination thereof.

In certain embodiments, the transmitter further to, in response to the receiver receiving the report corresponding to the beam measurements, transmit a mobility message confirming mobility of the UE.

In some embodiments, the type of reporting corresponding to the triggering cell comprises RRC reporting or lower layer reporting.

In various embodiments, the configuration information comprises at least one triggering event.

In one embodiment, the configuration information comprises configuration of a first set of cells that use RRC reporting and a second set of cells that use lower layer reporting.

In one embodiment, a method at a network device, the method comprises: transmitting configuration information for a cell group, wherein the cell group comprises at least one cell separate from a current serving cell; and receiving a report from a UE, wherein the report corresponds to beam measurements via a type of reporting corresponding to a triggering cell, and the beam measurements correspond to the cell group, the current serving cell, or a combination thereof.

In certain embodiments, a method further comprises, in response to receiving the report corresponding to the beam measurements, transmitting a mobility message confirming mobility of the UE.

In some embodiments, the type of reporting corresponding to the triggering cell comprises RRC reporting or lower layer reporting.

In various embodiments, the configuration information comprises at least one triggering event.

In one embodiment, the configuration information comprises configuration of a first set of cells that use RRC reporting and a second set of cells that use lower layer reporting.

In certain embodiments, the network device determines the configuration information based on a high-mobility indication of the UE, a carrier frequency of the at least one cell, a deployment scenario of the network device, or a combination thereof.

In some embodiments, the determining is configured by an OAM entity.

In various embodiments, the high-mobility indication of the UE may indicate that the UE is in a high-speed train, a high-speed vehicle, or a non-terrestrial vehicle.

In one embodiment, the determining is based on determining that the carrier frequency is in a FR2 band or a millimeter-wave band.

In certain embodiments, the determining is based on determining that the deployment scenario is indicated 'urban', 'macro urban', or 'micro urban'.

Embodiments may be practiced in other specific forms. The described embodiments are to be considered in all respects only as illustrative and not restrictive. The scope of the invention is, therefore, indicated by the appended claims rather than by the foregoing description. All changes which come within the meaning and range of equivalency of the claims are to be embraced within their scope.

Further aspects of the invention are provided by the subject matter of the following clauses:
Clause 1. A user equipment (UE), comprising: at least one memory; and at least one processor coupled with the at least one memory and configured to cause the UE to: receive configuration information for a cell group, wherein the cell group comprises at least one cell separate from a current serving cell; perform beam measurements at a physical layer, wherein the beam measurements correspond to the cell group, the current serving cell, or a combination thereof; determine, based on the beam measurements, a triggering event at the physical layer, wherein the triggering event corresponds to a triggering cell; and determine a type of reporting based on a configuration of the triggering cell.
Clause 2. The UE of Clause 1, wherein the at least one processor is configured to cause the UE to transmit a report corresponding to the beam measurements using the determined type of reporting.
Clause 3. The UE of Clause 2, wherein the at least one processor is configured to cause the UE to, in response to transmitting the report corresponding to the beam measurements, receive a mobility message confirming mobility of the UE.
Clause 4. The UE of Clause 1, wherein the configuration of the triggering cell comprises radio resource control (RRC) reporting or lower layer reporting.
Clause 5. The UE of Clause 1, wherein the configuration information comprises at least one triggering event.
Clause 6. The UE of Clause 1, wherein the configuration information comprises configuration of a first set of cells that use radio resource control (RRC) reporting and a second set of cells that use lower layer reporting.
Clause 7. A method performed by a user equipment (UE), the method comprising: receiving configuration information for a cell group, wherein the cell group comprises at least one cell separate from a current serving cell; performing beam measurements at a physical layer, wherein the beam measurements correspond to the cell group, the current serving cell, or a combination thereof; determining, based on the beam measurements, a triggering event at the physical layer, wherein the triggering event corresponds to a triggering cell; and determining a type of reporting based on a configuration of the triggering cell.
Clause 8. The method of Clause 7, further comprising transmitting a report corresponding to the beam measurements using the determined type of reporting.
Clause 9. The method of Clause 8, further comprising, in response to transmitting the report corresponding to the beam measurements, receiving a mobility message confirming mobility of the UE.
Clause 10. The method of Clause 7, wherein the configuration of the triggering cell comprises radio resource control (RRC) reporting or lower layer reporting.
Clause 11. The method of Clause 7, wherein the configuration information comprises at least one triggering event.
Clause 12. The method of Clause 7, wherein the configuration information comprises configuration of a first set of cells that use radio resource control (RRC) reporting and a second set of cells that use lower layer reporting.
Clause 13. A processor for wireless communication, comprising: at least one controller coupled with at least one memory and configured to cause the processor to: receive configuration information for a cell group, wherein the cell group comprises at least one cell separate from a current serving cell; perform beam measurements at a physical layer, wherein the beam measurements correspond to the cell group, the current serving cell, or a combination thereof; determine, based on the beam measurements, a triggering event at the physical layer, wherein the triggering event corresponds to a triggering cell; and determine a type of reporting based on a configuration of the triggering cell.
Clause 14. The processor of Clause 13, wherein the at least one controller is configured to cause the processor to transmit a report corresponding to the beam measurements using the determined type of reporting.
Clause 15. The processor of Clause 14, wherein the at least one controller is configured to cause the processor to, in response to transmitting the report corresponding to the beam measurements, receive a mobility message confirming mobility of a user equipment (UE).
Clause 16. A base station, comprising: at least one memory; and at least one processor coupled with the at least one memory and configured to cause the base station to: transmit configuration information for a cell group, wherein the cell group comprises at least one cell separate from a current serving cell; and receive a report from a user equipment (UE), wherein the report corresponds to beam measurements via a type of reporting corresponding to a triggering cell, and the beam measurements correspond to the cell group, the current serving cell, or a combination thereof.
Clause 17. The base station of Clause 16, wherein the at least one processor is configured to cause the base station to, in response to receiving the report corresponding to the beam measurements, transmit a mobility message confirming mobility of the UE.
Clause 18. The base station of Clause 16, wherein the type of reporting corresponding to the triggering cell comprises radio resource control (RRC) reporting or lower layer reporting.
Clause 19. The base station of Clause 16, wherein the configuration information comprises at least one triggering event.
Clause 20. The base station of Clause 16, wherein the configuration information comprises configuration of a first set of cells that use radio resource control (RRC) reporting and a second set of cells that use lower layer reporting.

## Claims

1. A user equipment, UE, (102), the UE (102) comprising:
at least one memory (204); and
at least one processor (202) coupled with the at least one memory (204) and configured to cause the UE (102) to:
receive configuration information for a cell group, wherein the cell group comprises at least one candidate cell separate from a current serving cell;
perform beam measurements, wherein the beam measurements correspond to at least one of the cell group or the current serving cell;
determine, based on the beam measurements, a triggering event, wherein the triggering event corresponds to a triggering cell, wherein a type of reporting is based on a configuration of the triggering cell.

2. The UE (102) of claim 1, wherein the at least one processor (202) is configured to cause the UE (102) to transmit a report corresponding to the beam measurements using the type of reporting, wherein the report is transmitted using a medium access control, MAC, control element, CE.

3. The UE (102) of claim 2, wherein the at least one processor (202) is configured to cause the UE (102) to receive a mobility message confirming mobility of the UE (102), wherein the mobility message is received using a second MAC CE.

4. The UE (102) of claim 1, wherein the configuration of the triggering cell comprises radio resource control, RRC, reporting or lower layer reporting.

5. The UE (102) of claim 1, wherein the configuration information comprises at least one triggering event.

6. The UE (102) of claim 1, wherein the configuration information comprises configuration of a first set of cells that use RRC reporting and a second set of cells that use lower layer reporting.

7. A method performed by a user equipment, (102), the method comprising:
receiving configuration information for a cell group, wherein the cell group comprises at least one candidate cell separate from a current serving cell;
performing beam measurements, wherein the beam measurements correspond to at least one of the cell group or the current serving cell;
determining, based on the beam measurements, a triggering event, wherein the triggering event corresponds to a triggering cell, wherein a type of reporting is based on a configuration of the triggering cell.

8. The method of claim 7, further comprising transmitting a report corresponding to the beam measurements using the type of reporting, wherein the report is transmitted using a medium access control, MAC, control element, CE.

9. The method of claim 8, further comprising, in response to transmitting the report corresponding to the beam measurements, receiving a mobility message confirming mobility of the UE (102), wherein the mobility message is received using a second MAC CE.

10. The method of claim 7, wherein the configuration of the triggering cell comprises radio resource control, RRC, reporting or lower layer reporting.

11. The method of claim 7, wherein the configuration information comprises at least one triggering event.

12. The method of claim 7, wherein the configuration information comprises configuration of a first set of cells that use RRC reporting and a second set of cells that use lower layer reporting.

13. A base station (104), comprising:
at least one memory (304); and
at least one processor (302) coupled with the at least one memory (304) and configured to cause the base station (104) to:
transmit configuration information for a cell group, wherein the cell group comprises at least one candidate cell separate from a current serving cell; and
receive a report from a user equipment, UE, (102), wherein the report corresponds to beam measurements via a type of reporting corresponding to a triggering cell, and the beam measurements correspond to at least one of the cell group or the current serving cell.

14. The base station (104) of claim 13, wherein the at least one processor (302) is configured to cause the base station (104) to, in response to receiving the report corresponding to the beam measurements, transmit a mobility message confirming mobility of the UE (102), wherein the mobility message is transmitted using a medium access control, MAC, control element, CE.

15. A method performed by a base station (104), the method comprising:
transmitting configuration information for a cell group, wherein the cell group comprises at least one candidate cell separate from a current serving cell; and
receiving a report from a user equipment, UE, (102), wherein the report corresponds to beam measurements via a type of reporting corresponding to a triggering cell, and the beam measurements correspond to at least one of the cell group or the current serving cell.
